(19) Europäisches Patentamt / European Patent Office / Office européen des brevets

(11) **EP 3 407 323 A1**

(12) **EUROPEAN PATENT APPLICATION**
published in accordance with Art. 153(4) EPC

(43) Date of publication:
**28.11.2018 Bulletin 2018/48**

(51) Int Cl.:
**G08G 1/00** *(2006.01)* **B60K 35/00** *(2006.01)*
**B60W 40/09** *(2012.01)*

(21) Application number: **16886343.9**

(22) Date of filing: **22.01.2016**

(86) International application number:
**PCT/JP2016/051839**

(87) International publication number:
**WO 2017/126102 (27.07.2017 Gazette 2017/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Volvo Truck Corporation**
**405 08 Göteborg (SE)**

(72) Inventor: **ISHIDA, Takahiro**
**Ageo-shi**
**Saitama 362-8523 (JP)**

(74) Representative: **Volvo Technology Corporation**
**Volvo Group Intellectual Property**
**BF14100, VGHQ3A**
**405 08 Göteborg (SE)**

(54) **DRIVING EVALUATION DEVICE, DRIVING EVALUATION METHOD, REFERENCE DATA PROVISION METHOD, REFERENCE DATA PROVISION DEVICE, AND REFERENCE DATA PROVISION PROGRAM**

(57) A driving evaluation device requests, to an external device, reference data that allows identification of distribution of past evaluation results related to an evaluation-target driving condition of a vehicle, and displays an evaluation result corresponding to the driving condition of the vehicle in real time with reference to the reference data returned by the external device. A computer stores, into a storage, past evaluation results corresponding to driving conditions of vehicles, and generates reference data from a plurality of evaluation results stored in the storage. In response to a request of the reference data from an on-board device of the vehicle, the computer returns the reference data to the on-board device.

FIG.1

EP 3 407 323 A1

**Description**

TECHNICAL FIELD

The present invention relates to a device and a method for driving evaluation, and to a method, a device, and a program for providing reference data, all of which are provided for evaluating vehicle driving skill.

BACKGROUND ART

As a driving evaluation device for evaluating vehicle driving skill, a driving evaluation device as disclosed in JP 2010-231776 A (Patent Document 1) has been proposed. This driving evaluation device calculates an evaluation result corresponding to driving conditions of the vehicle with reference to past evaluation results (such as the highest score), and presents the thus-calculated evaluation result to the driver.

REFERENCE DOCUMENT LIST

PATENT DOCUMENT

Patent Document 1 JP 2010-231776 A

SUMMARY OF THE INVENTION

PROBLEM TO BE SOLVED BY THE INVENTION

Specifically, such a conventional driving evaluation device refers to numerical values of scores representing the past evaluation results. Thus, the conventional driving evaluation device may undesirably calculate an evaluation result based on past evaluation results that are acquired during traveling in unusual situations such as traveling with a tailwind, which is advantageous for fuel economy. This may lead to problems such as, even when a vehicle is traveling with a headwind, which is disadvantageous for fuel economy, an evaluation result calculated based on past evaluation results that are acquired during traveling with a tailwind may be presented to the driver of the vehicle. Such an evaluation result may encourage the driver to make useless attempts to improve fuel economy, even though there actually remains no room for improved fuel economy.

In order to address at least some of these problems, the present invention has been made to provide a device and a method for driving evaluation, and a method, a device, and a program for providing reference data, all of which allow for determining whether or not there remains any room for improved driving skill.

MEANS FOR SOLVING THE PROBLEM

A driving evaluation device comprises a communication device for wirelessly communicating with an external device, a display device, and a control device. The control device requests, to the external device, reference data that allows identification of distribution of past evaluation results related to an evaluation-target driving condition. Then, the control device calculates an evaluation result corresponding to the driving condition of the vehicle in real time with reference to the reference data returned by the external device, and displays the evaluation result on the display device.

A control device including a display device and a communication device for wirelessly communicating with an external device requests, to the external device, reference data that allows identification of distribution of past evaluation results related to an evaluation-target driving condition. Then, the control device calculates an evaluation result corresponding to the driving condition of the vehicle in real time with reference to the reference data returned by the external device, and displays the evaluation result on the display device.

A computer including a storage stores, into the storage, an evaluation result corresponding to a driving condition of a vehicle and being transmitted by an on-board device of the vehicle, and generates, from a plurality of evaluation results stored in the storage, reference data that allows identification of distribution of the evaluation results. The computer returns the reference data to the on-board device in response to a request of the reference data from the on-board device.

EFFECTS OF THE INVENTION

According to the present invention, it is possible to determine whether or not there remains any room for improved driving skill.

BRIEF DESCRIPTION OF THE DRAWINGS

FIG. 1 is a system configuration diagram of an example driving evaluation system.
FIG. 2 is an internal configuration diagram of an example telematics unit.
FIG. 3 is an internal configuration diagram of an example human machine interface.
FIG. 4 is a configuration diagram illustrating an example vehicle layout.
FIG. 5 is an internal configuration diagram of an example server computer.
FIG. 6 is a flowchart of an example procedure for specifying data selection conditions, display items and the presence or absence of guidance.
FIG. 7 is a flowchart of example initialization processing performed by an on-board device.
FIG. 8 is a flowchart of example driving evaluation processing performed by the on-board device.
FIG. 9 shows example score regions.
FIG. 10 illustrates an example display form of the score for the utilization ratio of the top gear.
FIG. 11 illustrates an example display form of the score for the current fuel economy.
FIG. 12 illustrates an example display form of the current and target scores.
FIG. 13 is a flowchart of example evaluation result notification processing performed by the on-board device.
FIG. 14 is a flowchart of example reference data providing processing performed by a server computer.
FIG. 15 is a flowchart of an example database updating processing performed by the server computer.

MODE FOR CARRYING OUT THE INVENTION

An embodiment for implementing the present invention will be described below with reference to the accompanying drawings.

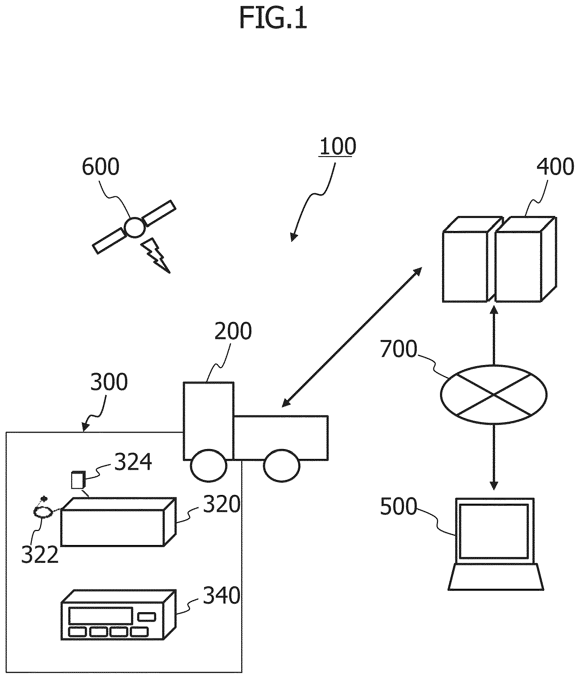

FIG. 1 shows an example driving evaluation system for evaluating vehicle driving skill.

A driving evaluation system 100 includes an on-board device 300 installed in a vehicle 200 such as a truck, a server computer 400 installed in a service center of an application provider or the like, and a personal computer 500 installed in an office of a transportation company or the like. Note that the server computer 400 may be an example of an external device.

The on-board device 300 includes a telematics unit 320 for making telematics services available, and a human machine interface (HMI) 340 that provides input-output functionality for the telematics unit 320.

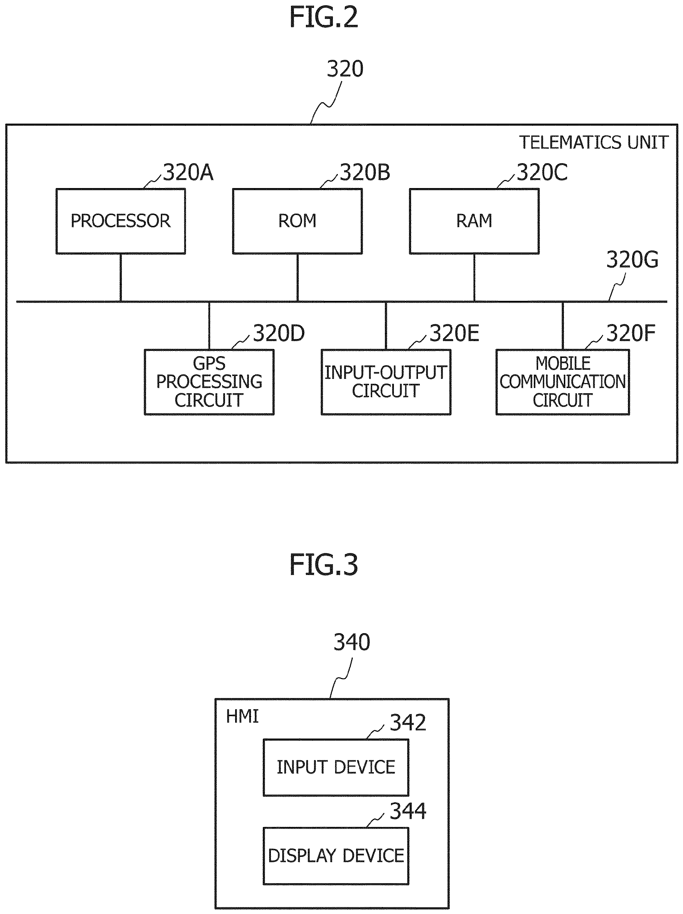

The telematics unit 320 includes a global positioning system (GPS) antenna 322 for receiving signals from a GPS satellite 600, and a mobile communication antenna 324 for wirelessly communicating with the server computer 400. As shown in FIG. 2, the telematics unit 320 contains a processor 320A such as a central processing unit (CPU), a read only memory (ROM) 320B that stores a control program and the like, a random access memory (RAM) 320C that provides a temporary storage area, a GPS processing circuit 320D, an input-output circuit 320E, a mobile communication circuit 320F, and a bus 320G connecting these with each other. Note that, instead of containing the GPS processing circuit 320D and mobile communication circuit 320F, the telematics unit 320 may be connected to the GPS processing circuit 320D and mobile communication circuit 320F via the input-output circuit 320E. Here, a microcomputer including the processor 320A, ROM 320B, RAM 320C, input-output circuit 320E, and bus 320G may be an example of a control device.

The GPS processing circuit 320D processes the signals received by the GPS antenna 322 to determine the current location of the vehicle 200. The input-output circuit 320E receives digital or analog signals from devices such as various sensors and switches, and outputs a digital or analog drive signal to an external device and/or the like. The mobile communication circuit 320F wirelessly communicates with the server computer 400 via the mobile communication antenna 324. The mobile communication circuit 320F and mobile communication antenna 324 may collectively be an example of a communication device.

As shown in FIG. 3, the HMI 340 includes an input device 342, such as switches and buttons operable by the driver and the like, and a display device 344, such as a liquid crystal monitor for displaying information to the driver and the like. The input device 342 allows for specifying, for example, driver information for identifying the driver of the vehicle 200, and the weight of the vehicle 200 (such as how much load is carried by the vehicle 200). Here, in place of the input device 342 and display device 344, the HMI 340 may include a touch screen or the like that provides functionality of both of these. The HMI 340 may also present a variety of information by voice.

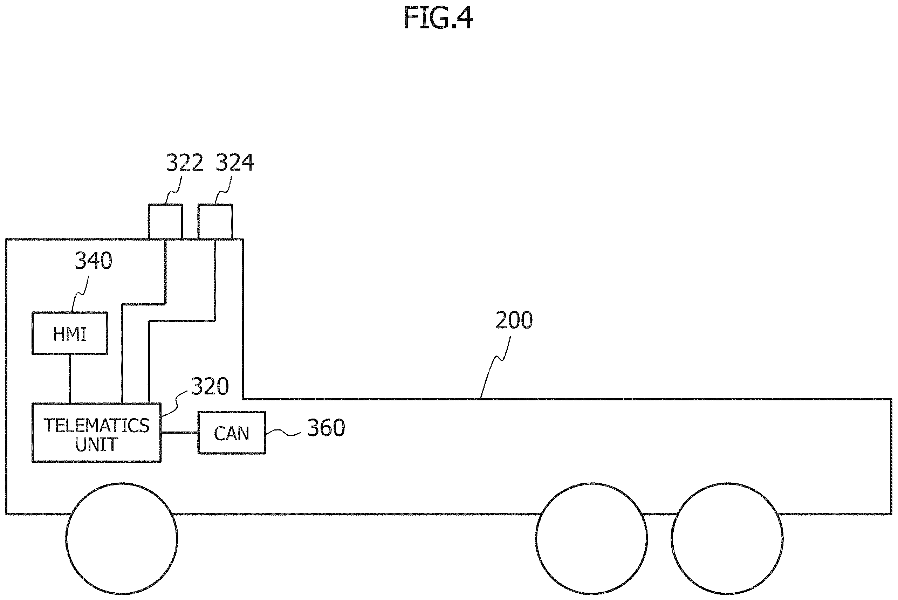

As shown in FIG. 4, the telematics unit 320 and HMI 340 are installed at predetermined locations of the vehicle 200 and electrically connected to each other. In addition, the GPS antenna 322 and mobile communication antenna 324 are mounted in an upper portion of the vehicle 200 such as on the upper surface of the cabin, and electrically connected to the telematics unit 320. Furthermore, the telematics unit 320 is connected to a controller area network (CAN) 360, which may be an example of an on-board network, so as to be capable of indirectly receiving signals from devices such as various sensors and switches via the input-output circuit 320E. Accordingly, the telematics unit 320 is capable of reading various signals transmitted through the CAN 360 at any time.

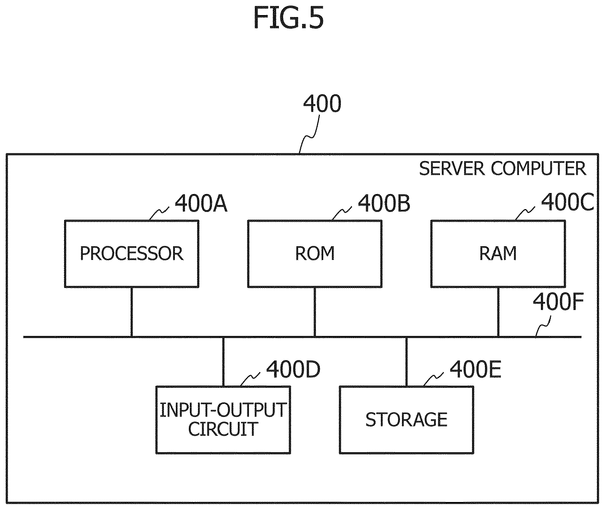

As shown in FIG. 5, the server computer 400 contains a processor 400A such as a CPU, a ROM 400B that stores a control program and the like, and a RAM 400C that provides a temporary storage area, an input-output circuit 400D for providing connection with external devices, a storage 400E such as a hard disk drive, and a bus 400F connecting these with each other.

In the storage 400E, a database storing a plurality of past scores (past evaluation results) is established in which the past scores are associated at least with a driver, a vehicle, an area where the vehicle travels (referred to as "traveling area" below), the weight of the vehicle, and a time of day at which the vehicle travels (referred to as "traveling time of day" below). Accordingly, among the past scores in the database, score(s) that meet a predetermined condition may be extracted by using, as a parameter, at least one of the driver, vehicle, traveling area, vehicle weight, and traveling time of day. The evaluation-target items will be described in detail later.

In order to use services provided by an application provider, the personal computer 500 is communicatively connected to the server computer 400 via, for example, the Internet 700, which may be an example of a computer network. Here, a web browser, for example, is pre-installed on the personal computer 500 so as to allow for various settings related to the services provided by the application provider.

In the driving evaluation system 100 as described above, the telematics unit 320 of the on-board device 300 requests reference data to the server computer 400 in response to when the ignition switch of the vehicle 200 is turned from off to on. The reference data allows identification of the distribution of the past evaluation results related to the evaluation-target driving conditions. Then, with reference to the reference data returned by the server computer 400, the telematics unit 320 calculates an evaluation result corresponding to the driving conditions of the vehicle 200 in real time, and displays the evaluation result on the display device 344 of the HMI 340. Here, the reference data may contain, for example, a mean value $\mu$ and a standard deviation $\sigma$, which may express a normal distribution of past evaluation results.

On the other hand, in response to when the ignition switch of the vehicle 200 is turned from on to off, the server computer 400 stores, into the storage 400E, the evaluation result corresponding to the driving conditions of the vehicle 200, which is transmitted from the telematics unit 320 of the on-board device 300. In addition, from a plurality of evaluation results stored in the storage 400E, i.e., from the past evaluation results, the server computer 400 generates reference data that allows identification of the distribution of the past evaluation results. When the reference data is requested by the on-board device 300, the server computer 400 returns the reference data to the on-board device 300.

Before evaluating the driving skill for the vehicle 200, an operator such as a transportation operation manager of a transportation company operates the personal computer 500, which is installed in the office, to specify data selection conditions for narrowing down the past evaluation results, display items to be presented to the driver, and the presence or absence of guidance.

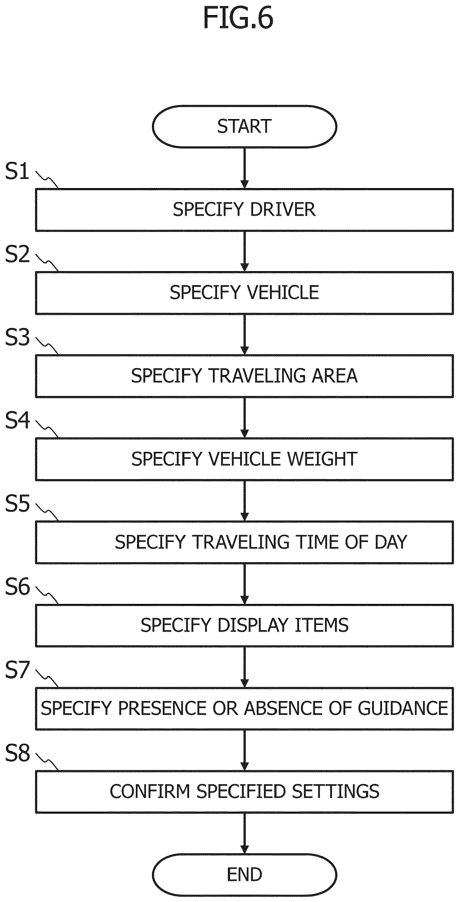

FIG. 6 illustrates a procedure in which an operator such as the transportation operation manager specifies the data selection conditions, the display items and the presence or absence of guidance. Note that, although the transportation operation manager specifies various settings in the following description, another operator may specify various settings under the control of the transportation operation manager, for example.

In step 1 (abbreviated as "SI" in FIG. 6; the same applies below), the transportation operation manager interacts with a setting screen displayed on the personal computer 500, and specifies a driver of the vehicle 200, which is one of the data selection conditions. Here, the transportation operation manager may omit specifying the driver when there is no need to narrow down the past evaluation results based on the driver.

In step 2, the transportation operation manager interacts with the setting screen displayed on the personal computer 500, and specifies a vehicle (e.g., vehicle identification information), which is one of the data selection conditions. Here, the transportation operation manager may omit specifying the vehicle when there is no need to narrow down the past evaluation results based on the vehicle.

In step 3, the transportation operation manager interacts with the setting screen displayed on the personal computer 500, and specifies a traveling area (a path along which the vehicle travels), which is one of the data selection conditions. Here, the transportation operation manager may omit specifying the traveling area when there is no need to narrow down the past evaluation results based on the traveling area.

In step 4, the transportation operation manager interacts with the setting screen displayed on the personal computer 500, and specifies a vehicle weight, which is one of the data selection conditions. Here, the transportation operation manager may omit specifying the vehicle weight when there is no need to narrow down the past evaluation results based on the vehicle weight.

In step 5, the transportation operation manager interacts with the setting screen displayed on the personal computer 500, and specifies a traveling time of day, which is one of the data selection conditions. Here, the transportation operation manager may omit specifying the traveling time of day when there is no need to narrow down the past evaluation results based on the traveling time of day.

In step 6, the transportation operation manager interacts with the setting screen displayed on the personal computer 500, and specifies display items to be presented to the driver of the vehicle 200. Examples of the display items may include current fuel economy, average fuel economy, minimum fuel economy, maximum fuel economy, and a target score.

In step 7, the transportation operation manager interacts with the setting screen displayed on the personal computer 500, and specifies the presence or absence of guidance for notifying a change in the evaluation result corresponding to the driving conditions of the vehicle 200. The guidance may be set to "ON" or "OFF" by default, for example.

In step 8, the transportation operation manager interacts with the setting screen displayed on the personal computer 500 and confirms the data selection conditions, display items, and presence or absence of guidance that are specified in steps 1 to 7. In response, the personal computer 500 reads these data selection conditions, display items, and presence or absence of guidance that are specified with the setting screen and transmits these specified settings to the server computer 400 via the Internet 700. Upon receiving these data selection conditions, display items, and presence or absence of guidance from the personal computer 500, the server computer 400 associates them with this service user and stores them in the storage 400E. This allows the server computer 400 to identify the data selection conditions, display items, and presence or absence of guidance that are specified by a service user, by using, for example, the login information of the service user.

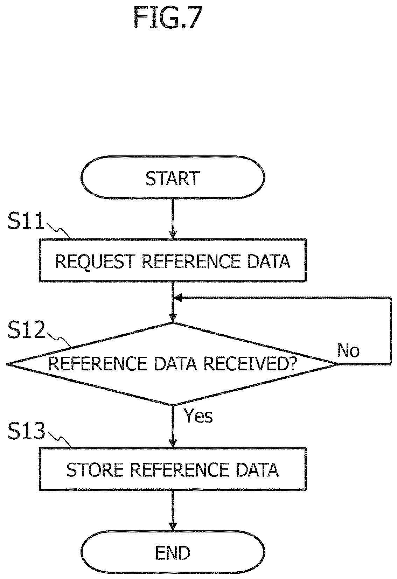

FIG. 7 illustrates example initialization processing of the driving evaluation that the telematics unit 320 of the on-board device 300 performs in response to when the ignition switch of the vehicle 200 is turned from off to on, i.e., in response to the start of the on-board device 300.

In step 11, the processor 320A of the telematics unit 320 requests reference data to the server computer 400 via the mobile communication circuit 320F and mobile communication antenna 324.

In step 12, the processor 320A of the telematics unit 320 determines whether or not it has received the reference data from the server computer 400 via the mobile communication circuit 320F and mobile communication antenna 324. When the processor 320A of the telematics unit 320 determines that it has received the reference data (Yes), the operation proceeds to step 13. On the other hand, when determining that it has not received the reference data yet (No), the processor 320A of the telematics unit 320 waits until it receives the reference data.

In step 13, the processor 320A of the telematics unit 320 stores the reference data into, for example, the RAM 320C so as to be able to refer to the reference data at any time. Note that the processor 320A of the telematics unit 320 may alternatively store the reference data into the ROM 320B so as to ensure that the reference data will not be lost even if the battery is instantaneously disconnected.

In the initialization processing described above, upon start of the on-board device 300 of the vehicle 200, the processor 320A of the telematics unit 320 requests, to the server computer 400, reference data that allows identification of the distribution of the past evaluation results related to an evaluation target. Then, when the processor 320A of the telematics unit 320 receives the reference data from the server computer 400, the processor 320A of the telematics unit 320 stores the reference data into the RAM 320C. As a result, the processor 320A of the telematics unit 320 comes to be able to refer to the reference data at any time.

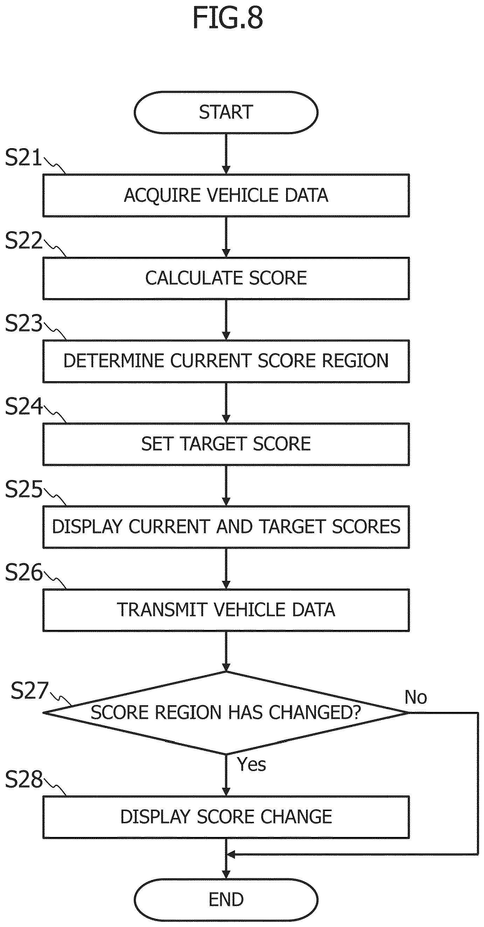

FIG. 8 illustrates example driving evaluation processing that the telematics unit 320 of the on-board device 300 repeatedly performs at predetermined time intervals after completing the initialization processing.

In step 21, the processor 320A of the telematics unit 320 acquires various data on the vehicle 200. Examples of the data on the vehicle 200 include its location information and the following data from the start: how much fuel has been consumed, what distance has been traveled, how much fuel is consumed during idling, duration of idling, what distance is traveled through the green zone, how long time it takes to travel through the green zone, how much fuel is consumed while it travels through the green zone, how long the cruise control is used, what distance is traveled by coasting, duration of coasting, how long the top gear is used, and how much fuel is consumed with the use of the top gear. Among these examples, the processor 320A of the telematics unit 320 acquires at least how much fuel has been consumed.

The processor 320A of the telematics unit 320 determines the current location of the vehicle 200 by processing the signals from the GPS satellite received by the GPS antenna 322. Then, by reading various signals transmitted through the CAN 360 and processing the signals as necessary, the processor 320A of the telematics unit 320 determines the following data from the start: how much fuel has been consumed, what distance has been traveled, how much fuel is consumed during idling, duration of idling, what distance is traveled through the green zone, how long time it takes to travel through the green zone, how much fuel is consumed while it travels through the green zone, how long the cruise control is used, what distance is traveled by coasting, duration of coasting, how long the top gear is used, and how much fuel is consumed with the use of the top gear.

In step 22, with reference, for example, to the reference data stored in the RAM 320C, the processor 320A of the telematics unit 320 calculates scores that represent the evaluation results corresponding to the driving conditions of the vehicle 200. Examples of the driving conditions of the vehicle 200 used here include conditions in one driving cycle regarding the operation of the engine and transmission, the vehicle speed, idling, and anticipatory driving. The term "one driving cycle" refers to vehicle travel made from when the ignition switch is turned on until the ignition switch is turned off.

(1) Conditions Regarding Operation of Engine and Transmission

- The utilization ratio of automatic transmission while the economy mode is turned on (= duration of use / total duration of engine operation)
- The utilization ratio of manual transmission (= duration of use / total duration of engine operation)
- The utilization ratio of automatic transmission while the economy mode is turned off (= duration of use / total duration of engine operation)
- The utilization ratio of the top gear (= travel distance with the use of the top gear / total travel distance)
- The proportion of green zone travel (= fuel consumption in traveling through the green zone / total fuel consumption)

(2) Conditions Regarding Vehicle Speed

- The proportion of travel at economical vehicle speed (= fuel consumption in traveling at a vehicle speed equal to or less than a threshold value / total fuel consumption)
- The utilization ratio of auto cruise (= travel distance with auto cruise / total travel distance)

(3) Conditions Regarding Idling

- The utilization ratio of idling (= duration of idling / total duration of engine operation)

(4) Conditions Regarding Anticipatory Driving

- The utilization ratio of coasting (= distance traveled by coasting / total travel distance)
- The utilization ratio of braking (= the number of braking operations / the number of vehicle stops)

Then, the processor 320A of the telematics unit 320 calculates the scores of the above driving conditions, using, for example, a known statistical method. Each score indicates where the corresponding driving condition is located in the distribution of the scores that is identified based on the reference data. As an example of such a score, a deviation in a normal distribution may be used.

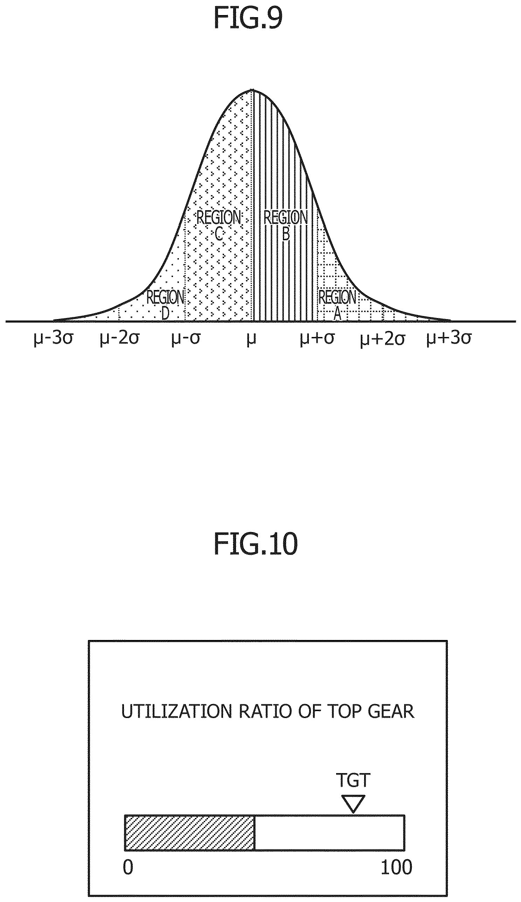

In step 23, the processor 320A of the telematics unit 320 determines which score region includes the score for each of the evaluation-target driving conditions of the vehicle 200 based on the mean value $\mu$ and standard deviation $\sigma$ of the reference data. In other words, as shown in FIG. 9, the distribution of the past scores may be divided into regions A to D, where the scores that are equal to or above $\mu+\sigma$ belong to the region A, the scores that are equal to or above $\mu$ and less than $\mu+\sigma$ belong to the region B, the scores that are equal to or above $\mu-\sigma$ and less than $\mu$ belong to the region C, and the scores that are less than $\mu-\sigma$ belong to the region D, and the processor 320A of the telematics unit 320 determines which of these regions A to D includes each of the scores for the driving conditions of the vehicle 200. The number of the score regions is not limited to four (A to D), and may be five or more.

In step 24, the processor 320A of the telematics unit 320 sets a target score for each driving condition of the vehicle 200 depending on which of the regions A to D includes the current score. Specifically, the processor 320A of the telematics unit 320 sets the target score to 100 when the current score is in the region A, sets the target score to $\mu+\sigma$ when the current score is in the region B, and sets the target score to $\mu$ when the current score is in the region C or D. In short, the processor 320A of the telematics unit 320 sets a target score to a value that allows improvement of the actual score at least toward the mean value $\mu$.

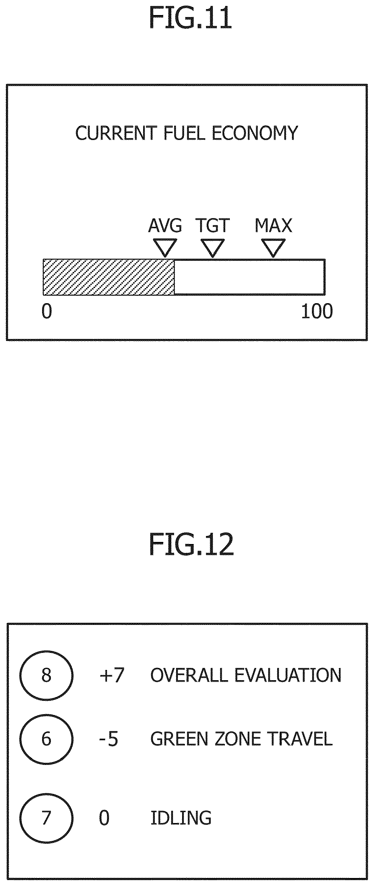

In step 25, as shown in FIGS. 10 and 11, the processor 320A of the telematics unit 320 displays the current scores and the target scores on the display device 344 of the HMI 340. Each current score may be displayed as a position, which is indicated, for example, by colored area, in a bar graph ranging from 0 to 100 that represents the distribution of the scores identified based on the reference data. Each target score may be indicated by a triangle symbol at the top of the bar graph, for example. FIG. 10 shows a display form of the utilization ratio of the top gear, and FIG. 11 shows a display form of the current fuel economy obtained by dividing a travel distance by a fuel consumption amount. However, as shown in FIG. 11, both the average fuel economy and the maximum fuel economy may be displayed as the current fuel economy.

The processor 320A of the telematics unit 320 may calculate the score for each large-category set of driving conditions (such as the conditions regarding the operation of the engine and transmission) by weighting the scores for small-category driving conditions (such as the utilization ratio of automatic transmission while the economy mode is turned on) using predetermined weights and summing the thus-weighted scores. The processor 320A of the telematics unit 320 may calculate an overall evaluation score by weighting the scores for the large-category sets of driving conditions using predetermined weights and summing the thus-weighted scores. Then, the processor 320A of the telematics unit 320 may calculate the difference between the score for each large-category set of driving conditions and its target score as well as the difference between the overall evaluation score and its target score, and may display these scores and differences on the display device 344 of the HMI 340 as shown in FIG. 12.

In step 26, among the various data on the vehicle 200 acquired in step 21, the processor 320A of the telematics unit 320 transmits, for example, data, driver information, and the like which are necessary to prepare a daily report to the server computer 400 via the mobile communication circuit 320F and mobile communication antenna 324. What data is necessary to prepare the daily report may be defined in advance by an operator such as the transportation operation manager of the transportation company. The driver information and the like may be identified based on the way the HMI 340 is operated.

In step 27, the processor 320A of the telematics unit 320 determines whether or not the score region for the evaluation-target driving condition has changed from that determined in the previous iteration of the driving evaluation processing. When the processor 320A of the telematics unit 320 determines that the score region has changed (Yes), the operation proceeds to step 28. On the other hand, when the processor 320A of the telematics unit 320 determines that the score region has not changed (No), the operation ends.

In step 28, when the guidance is set to "ON", the processor 320A of the telematics unit 320 displays, on the display device 344 of the HMI 340, guidance indicating occurrence of a score change. For example, as indications of such a score change, an indication of score increase in an evaluation-target driving condition is displayed when the score region for the evaluation-target driving condition has changed for the better, and an indication of score decrease in an evaluation-target driving condition is displayed when the score region for the evaluation-target driving condition has changed for the worse. Such a score change may alternatively be informed by voice or the like.

As a result of the driving evaluation processing, the evaluation result corresponding to the driving conditions of the vehicle 200 is presented in a form that indicates where it is located in the distribution of the scores representing the past evaluation results. This allows the driver of the vehicle 200 to determine whether or not there remains any room for improved driving skill without taking into account traveling in unusual situations such as traveling with a tailwind, which may be represented by a score close to 100, traveling with a headwind, which may be represented by a score close to 0.

In addition, when the score region for an evaluation-target driving condition has changed, an indication of this is displayed. This allows the driver of the vehicle 200 to easily know the driver's driving skill has increased or decreased. Furthermore, since the vehicle data is sequentially transmitted to the server computer 400, the server computer 400 is also capable of sequentially providing the vehicle data to the transportation operation manager of the transportation company.

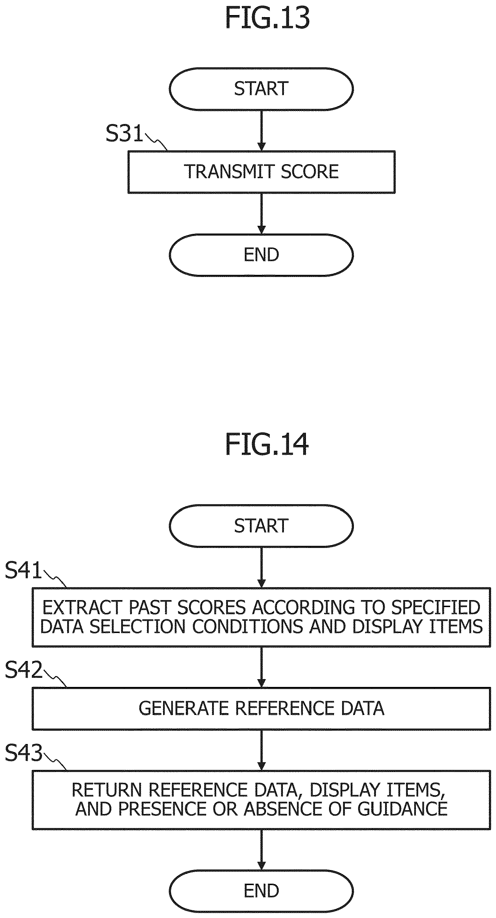

FIG. 13 illustrates example evaluation result notification processing that the telematics unit 320 of the on-board device 300 performs when it is shutting down, which occurs when the ignition switch of the vehicle 200 is turned from on to off.

In step 31, the processor 320A of the telematics unit 320 transmits the scores for the evaluation-target driving conditions to the server computer 400 via the mobile communication circuit 320F and mobile communication antenna 324.

In the driving evaluation notify processing, when the on-board device 300 is shutting down, the scores representing the evaluation results in one driving cycle are transmitted to the server computer 400. This allows the server computer 400 to accumulate past evaluation results by registering these scores into the database.

FIG. 14 illustrates example reference data providing processing that the server computer 400 performs in response to the receipt of a request for reference data. The storage 400E of the server computer 400 stores, in advance, a reference data providing program for implementing the reference data providing processing and database updating processing to be described later. In this case, the storage 400E may be an example of a computer-readable recording medium that stores the reference data providing program.

In step 41, among the past scores stored in the storage 400E, the processor 400A of the server computer 400 extracts scores according to the specified display items and data selection conditions. In this score extraction, each data selection condition that is not specified is ignored. Thus, only information on the evaluation-target driving conditions may be displayed by appropriately specifying the display items and data selection conditions.

In step 42, the processor 400A of the server computer 400 generates reference data that contains a mean value $\mu$ and a standard deviation $\sigma$, using the past scores extracted in step 41. The mean value $\mu$ and standard deviation $\sigma$ are calculated using the following formulas:

$$mean\ value\ \mu = the\ sum\ of\ scores\ related\ to\ display\ items/the\ number\ of\ the\ scores$$

$$standard\ deviation\ \sigma = \sqrt{variance\ \sigma^2}$$

$$variance\ \sigma^2 = \sum \{(score - mean\ value\ \mu)^2/the\ number\ of\ the\ scores\}$$

In step 43, the processor 400A of the server computer 400 returns the reference data, the display items, and the presence or absence of guidance to the on-board device 300 of the vehicle 200.

In the reference data providing processing, in response to a request for reference data from the on-board device 300, the server computer 400 extracts past scores from the storage 400E in accordance with the specified display items and data selection conditions. Then, the server computer 400 generates reference data from these extracted past scores, and returns the reference data, the display items, and the presence or absence of guidance to the on-board device 300 of the vehicle 200.

This allows the server computer 400 to provide the on-board device 300 with reference data that contributes to driving evaluation, and allows the on-board device 300 to evaluate the driving skill of the driver with reference to the reference data, the display items, and the presence or absence of the guidance returned from the server computer 400.

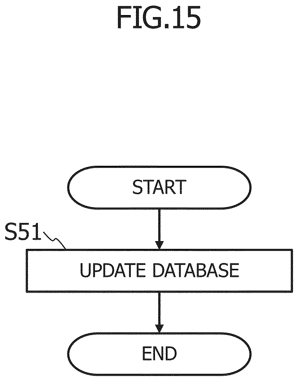

FIG. 15 illustrates an example database updating processing that the server computer 400 performs in response to the receipt of the vehicle data or scores.

In step 51, the processor 400A of the server computer 400 stores the received vehicle data or scores into the storage 400E and updates the database.

Through the database updating processing, the server computer 400 can update the database with data transmitted by the on-board device 300 of the vehicle 200. This allows the transportation operation manager of the transportation company to prepare, for example, a daily report or the like by referring to the vehicle data stored in the database. In addition, since scores are sequentially stored in the database, extensive scores, i.e., extensive past evaluation results may be accumulated therein.

The driving evaluation system 100 described above allows the driver of the vehicle 200 to visually identify where each of the current driving conditions is located in the distribution of the past evaluation results, and thus allows the driver of the vehicle 200 to determine whether or not there remains any room for improved driving skill without taking into account traveling in unusual situations. Thus, when there remains any room for improved driving skill, the driver of the vehicle 200 can improve fuel economy by, for example, revamping the driver's accelerator and gear shift operations and the like.

In the above embodiment, the operation is implemented via the server computer 400. Alternatively, however, the operation may be implemented with a configuration from which the server computer 400 is omitted. In this case, the functionality of the server computer 400 may be given to the on-board device 300.

REFERENCE SYMBOL LIST

| | |
|---|---|
| 100 | Driving evaluation system |
| 200 | Vehicle |
| 300 | On-board device |
| 320 | Telematics unit (control device) |
| 320A | Processor |
| 320B | ROM |
| 320C | RAM |
| 320E | Input-output circuit |
| 320F | Mobile communication circuit (communication device) |
| 320G | Bus |
| 324 | Mobile communication antenna (communication device) |
| 340 | HMI |
| 344 | Display device |
| 400 | Server computer (external device) |

400A    Processor
400E    Storage

**Claims**

1.  A driving evaluation device comprising:

    a communication device for wirelessly communicating with an external device;
    a display device; and
    a control device, wherein
    the control device is configured

    to request, to the external device, reference data that allows identification of distribution of past evaluation
    results related to an evaluation-target driving condition of a vehicle,
    to calculate an evaluation result corresponding to the driving condition of the vehicle in real time with
    reference to the reference data returned by the external device, and
    to display the evaluation result on the display device.

2.  The driving evaluation device according to claim 1, wherein
    the reference data contains a mean value and a standard deviation of scores representing evaluation results, and
    the control device is configured to calculate a score indicating where the driving condition of the vehicle is located
    in distribution of the scores that is identified based on the mean value and the standard deviation.

3.  The driving evaluation device according to claim 1 or 2, wherein
    the control device is configured

    to calculate a score for the evaluation-target driving condition in one driving cycle, and
    to transmit the score to the external device when the control device is shutting down.

4.  The driving evaluation device according to any one of claims 1 to 3, wherein the control device is configured to
    display, on the display device, a change in the evaluation result corresponding to the driving condition of the vehicle.

5.  The driving evaluation device according to any one of claims 1 to 4, wherein
    the control device is configured

    to set a target based on the evaluation result corresponding to the driving condition of the vehicle, and
    to display the target on the display device.

6.  The driving evaluation device according to any one of claims 1 to 5, wherein the driving condition of the vehicle
    includes at least information on fuel economy.

7.  A driving evaluation method for causing a control device including a display device and a communication device for
    wirelessly communicating with an external device
    to request, to the external device, reference data that allows identification of distribution of past evaluation results
    related to an evaluation-target driving condition of a vehicle,
    to calculate an evaluation result corresponding to the driving condition of the vehicle in real time with reference to
    the reference data returned by the external device, and
    to display the evaluation result on the display device

8.  The driving evaluation method according to claim 7, wherein
    the reference data contains a mean value and a standard deviation of scores representing evaluation results, and
    the control device calculates a score indicating where the driving condition of the vehicle is located in distribution
    of the scores that is identified based on the mean value and the standard deviation.

9.  A reference data providing method for causing a computer including a storage
    to store, into the storage, an evaluation result corresponding to a driving condition of a vehicle and being transmitted
    by an on-board device of the vehicle,

to generate, from a plurality of evaluation results stored in the storage, reference data that allows identification of distribution of the evaluation results, and

to return the reference data to the on-board device in response to a request of the reference data from the on-board device.

**10.** The reference data providing method according to claim 9, wherein the reference data contains a mean value and a standard deviation of scores representing evaluation results.

**11.** The reference data providing method according to claim 9 or 10, wherein
the computer narrows down the evaluation results stored in the storage based on at least one of a driver, a vehicle, a traveling area, a vehicle weight, and a traveling time of day, and
the computer generates the reference data from the narrowed-down evaluation results.

**12.** The reference data providing method according to any one of claims 9 to 11, wherein the driving condition of the vehicle includes at least information on fuel economy.

**13.** A reference data providing device comprising
a computer including a storage, wherein
the computer is configured

to store, into the storage, an evaluation result corresponding to a driving condition of a vehicle and being transmitted by an on-board device of the vehicle,
to generate, from a plurality of evaluation results stored in the storage, reference data that allows identification of distribution of the evaluation results, and
to return the reference data to the on-board device in response to a request of the reference data from the on-board device.

**14.** A reference data providing program for causing a computer including a storage to perform the steps of:

storing, into the storage, an evaluation result corresponding to a driving condition of a vehicle and being transmitted by an on-board device of the vehicle;
generating, from a plurality of evaluation results stored in the storage, reference data that allows identification of distribution of the evaluation results; and
returning the reference data to the on-board device in response to a request of the reference data from the on-board device.

# FIG.1

# FIG.2

320

TELEMATICS UNIT

320A
PROCESSOR

320B
ROM

320C
RAM

320G

320D
GPS PROCESSING CIRCUIT

320E
INPUT-OUTPUT CIRCUIT

320F
MOBILE COMMUNICATION CIRCUIT

# FIG.3

340

HMI

342
INPUT DEVICE

344
DISPLAY DEVICE

FIG.4

# FIG.5

400

SERVER COMPUTER

400A
PROCESSOR

400B
ROM

400C
RAM

400F

400D
INPUT-OUTPUT CIRCUIT

400E
STORAGE

# FIG.6

```
        ┌──────────────┐
        │    START     │
        └──────┬───────┘
               │
S1  ┌──────────▼──────────────┐
    │     SPECIFY DRIVER       │
    └──────────┬──────────────┘
               │
S2  ┌──────────▼──────────────┐
    │     SPECIFY VEHICLE      │
    └──────────┬──────────────┘
               │
S3  ┌──────────▼──────────────┐
    │  SPECIFY TRAVELING AREA  │
    └──────────┬──────────────┘
               │
S4  ┌──────────▼──────────────┐
    │  SPECIFY VEHICLE WEIGHT  │
    └──────────┬──────────────┘
               │
S5  ┌──────────▼────────────────────┐
    │  SPECIFY TRAVELING TIME OF DAY │
    └──────────┬────────────────────┘
               │
S6  ┌──────────▼──────────────┐
    │   SPECIFY DISPLAY ITEMS  │
    └──────────┬──────────────┘
               │
S7  ┌──────────▼────────────────────────────┐
    │ SPECIFY PRESENCE OR ABSENCE OF GUIDANCE │
    └──────────┬────────────────────────────┘
               │
S8  ┌──────────▼──────────────┐
    │ CONFIRM SPECIFIED SETTINGS │
    └──────────┬──────────────┘
               │
        ┌──────▼───────┐
        │     END      │
        └──────────────┘
```

# FIG.7

START

S11 — REQUEST REFERENCE DATA

S12 — REFERENCE DATA RECEIVED? — No

Yes

S13 — STORE REFERENCE DATA

END

# FIG.8

START

S21 — ACQUIRE VEHICLE DATA

S22 — CALCULATE SCORE

S23 — DETERMINE CURRENT SCORE REGION

S24 — SET TARGET SCORE

S25 — DISPLAY CURRENT AND TARGET SCORES

S26 — TRANSMIT VEHICLE DATA

S27 — SCORE REGION HAS CHANGED?    No

Yes

S28 — DISPLAY SCORE CHANGE

END

# FIG.9

REGION
C

REGION
B

REGION
D

REGION
A

μ-3σ    μ-2σ    μ-σ    μ    μ+σ    μ+2σ    μ+3σ

# FIG.10

UTILIZATION RATIO OF TOP GEAR

TGT
▽

0                              100

# FIG.11

CURRENT FUEL ECONOMY

AVG TGT MAX

0                    100

# FIG.12

8    +7    OVERALL EVALUATION

6    -5    GREEN ZONE TRAVEL

7    0    IDLING

# FIG.13

```
      ┌──────────────┐
      │    START     │
      └──────────────┘
             │
             ▼
S31  ┌──────────────────────┐
     │    TRANSMIT SCORE     │
     └──────────────────────┘
             │
             ▼
      ┌──────────────┐
      │     END      │
      └──────────────┘
```

# FIG.14

```
      ┌──────────────┐
      │    START     │
      └──────────────┘
             │
             ▼
S41  ┌────────────────────────────────────────────┐
     │ EXTRACT PAST SCORES ACCORDING TO SPECIFIED  │
     │ DATA SELECTION CONDITIONS AND DISPLAY ITEMS │
     └────────────────────────────────────────────┘
             │
             ▼
S42  ┌────────────────────────────────────────────┐
     │          GENERATE REFERENCE DATA            │
     └────────────────────────────────────────────┘
             │
             ▼
S43  ┌────────────────────────────────────────────┐
     │  RETURN REFERENCE DATA, DISPLAY ITEMS,      │
     │  AND PRESENCE OR ABSENCE OF GUIDANCE        │
     └────────────────────────────────────────────┘
             │
             ▼
      ┌──────────────┐
      │     END      │
      └──────────────┘
```

FIG.15

```
              ┌─────────────┐
              │   START     │
              └──────┬──────┘
                     │
                     ▼
S51  ┌───────────────────────────────┐
     │      UPDATE DATABASE          │
     └───────────────┬───────────────┘
                     │
                     ▼
              ┌─────────────┐
              │    END      │
              └─────────────┘
```

## INTERNATIONAL SEARCH REPORT

| International application No. |
|---|
| PCT/JP2016/051839 |

**A. CLASSIFICATION OF SUBJECT MATTER**
*G08G1/00*(2006.01)i, *B60K35/00*(2006.01)i, *B60W40/09*(2012.01)i

According to International Patent Classification (IPC) or to both national classification and IPC

**B. FIELDS SEARCHED**

Minimum documentation searched (classification system followed by classification symbols)
G08G1/00-99/00, G01C21/00-21/36, G01C23/00-25/00, B60K35/00-37/06, B60W10/00-10/30, B60W30/00-50/16

Documentation searched other than minimum documentation to the extent that such documents are included in the fields searched
Jitsuyo Shinan Koho        1922-1996   Jitsuyo Shinan Toroku Koho   1996-2016
Kokai Jitsuyo Shinan Koho  1971-2016   Toroku Jitsuyo Shinan Koho   1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2014-92795 A  (Aisin AW Co., Ltd.),<br>19 May 2014 (19.05.2014),<br>paragraphs [0023] to [0075]; fig. 1 to 3<br>(Family: none) | 1-2,7-14<br>3-6 |
| X | WO 2013/128919 A1  (Yamaha Motor Co., Ltd.),<br>06 September 2013 (06.09.2013),<br>paragraphs [0039] to [0115]; fig. 1 to 14<br>& EP 2821977 A1<br>paragraphs [0039] to [0116]; fig. 1 to 14 | 1-2,7-11,<br>13-14 |
| X<br><br>Y | JP 2014-106926 A  (Fujitsu Ltd.),<br>09 June 2014 (09.06.2014),<br>paragraphs [0013] to [0103]; fig. 1 to 16<br>(Family: none) | 1-2,7-11,<br>13-14<br>3-6 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>07 April 2016 (07.04.16) | Date of mailing of the international search report<br>19 April 2016 (19.04.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |

Form PCT/ISA/210 (second sheet) (January 2015)

**INTERNATIONAL SEARCH REPORT**

| International application No. |
| --- |
| PCT/JP2016/051839 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y | JP 2000-171267 A  (Data Tec Co., Ltd.), 23 June 2000 (23.06.2000), paragraphs [0022] to [0073]; fig. 1 to 27 & US 6438472 B1 column 6, line 45 to column 18, line 60; fig. 1 to 27 & JP 3044025 B          & WO 2000/034742 A1 & EP 1059508 A1          & CN 1290340 A | 3-6 |

Form PCT/ISA/210 (continuation of second sheet) (January 2015)

**EP 3 407 323 A1**

**REFERENCES CITED IN THE DESCRIPTION**

**Patent documents cited in the description**

- JP 2010231776 A